# EUROPÄISCHE PATENTANMELDUNG

(11) **EP 1 310 889 A1**
(43) Veröffentlichungstag der Anmeldung: **14.05.2003**
(21) Anmeldenummer: 02018970.0
(22) Anmeldetag: 26.08.2002
(51) Int. Cl.: G06F 17/60

(54) **Verfahren zur Bestellung von Produktionsmitteln**

(30) Priorität: 07.09.2001 DE 10144066; 08.08.2002 DE 10236443
(71) Anmelder: SIEMENS AKTIENGESELLSCHAFT, 80333 München (DE)
(72) Erfinder: Rossi, Gernot, 91245 Simmelsdorf (DE)

(57) **Zusammenfassung**

Die Erfindung betrifft ein Verfahren zur Bestellung wenigstens eines Produktionsmittels (HW,SW,DI), wobei eine Automatisierungskomponente (AK2,AK3,AA3,AA4) diese Bestellung ausführt. Dadurch lassen sich Kosten senken und die Effizienz von wenigstens einer Automatisierungskomponenten (AK2,AK3, AA3,AA4) und/oder industriellen Maschinen (M2,M3,PRM3,PRM4) steigern.

## Beschreibung

Die Erfindung betrifft ein Verfahren zur Bestellung von wenigstens einem Produktionsmittel, wobei das Produktionsmittel beispielsweise Hardware, Software und/oder eine Dienstleistung ist.

Nach dem Stand der Technik benötigt ein Kunde, welcher ein Produktionsmittel für eine Automatisierungskomponente und/oder eine industrielle Maschine bestellt, welche beispielsweise eine Produktions- oder eine Werkzeugmaschine ist Personal zur Durchführung der Bestellung. Die Verwendung von Personal beim Kunden für die Bestellung von Software, Hardware und/oder Dienstleistungen erfordert mit unter Fachkenntnisse bezüglich der Abwicklung der Bestellung und darüber hinaus Fachkenntnisse bezüglich des zu bestellenden Produktionsmittels. Der Zeitaufwand beim Kunden ist für die Aufgabe der Bestellung sehr hoch, da der Kunde zunächst Informationen darüber einzuholen hat, welche Komponente bzw. welches Teil zu bestellen ist, welche Bestellnummern nötig sind und an wen er die Bestellung zu richten hat. Auch beim Anbieter der Produktionsmittel ist Personal im Einsatz, welches die Bestellung der Kunden abwickelt. Insbesondere bei der Bestellung von Software ist es vielfach notwendig, die Software auf Datenträger als Hardware an den Kunden zu liefern. Diese Abläufe sind sehr zeitaufwendig und kostentreibend. Darüber hinaus besteht mit unter oft Unsicherheit darüber, ob das richtige Produktionsmittel bestellt ist. Je geschulter das eingesetzte Personal ist, desto reibungsloser ist eine Bestellung von Produktionsmittel abzuwickeln, wobei geschultes Personal ein hoher Kostenfaktor ist.

Der in den Ansprüchen 1 bis 16 angegebenen Erfindung liegt daher die Aufgabe zugrunde, ein Verfahren zur optimierten Bestellung von Produktionsmitteln anzugeben. Diese Aufgabe wird erfindungsgemäß mit den Merkmalen des Anspruchs 1 gelöst.

Bei diesem Verfahren zur Bestellung von wenigstens einem Produktionsmittel bestellt zumindest eine Automatisierungskomponente ein Produktionsmittel.

In vorteilhafter Weise werden Automatisierungskomponenten, industrielle Maschinen und/oder Anlagen dazu ertüchtigt Bestellungen ohne oder mit eingeschränkter Prüfung durch ein zuständiges Personal vorzunehmen. Die Bestellung richtet sich an einen Anbieter von Produktionsmittel. Das Volumen der Bestellung kann in seiner monetären Höhe oder in der Art der Bestellung begrenzt sein. Bestellbar sind beispielsweise Hardware wie Verschleißteile, z.B. Lüfter oder Batterien vordefinierte Ausbaustufen einer Anlage oder einer industriellen Maschine die über die Software aktiviert werden oder Updates von Versionenständen von Hardware oder Software. Beispielsweise ist auch eine Software-Aktivierung von Softwarefunktionen bestellbar. Darüber hinaus ergibt sich auch die Möglichkeit Dienstleistungen wie Wartungsarbeiten oder Optimierungen eines Systems, einer Anlage oder ähnliches zu bestellen. Optimierungen können beispielsweise in regelmäßigen Abständen erfolgen, z.B. über Betriebsstundenzähler getriggert oder auch nach einer erkannten Verschlechterung von Eigenschaften der Automatisierungskomponente und/oder der industriellen Maschine.

Die durch die industrielle Maschine und/oder die Automatisierungskomponente der industriellen Maschine angeforderten Bestellungen bzw. angeforderte Bestellung ist optional auch auf Serviceeinsätze ausdehnbar. Die Bezahlung des Produktionsmittels erfolgt beispielsweise über ein Guthabenkonto oder auf Ziel. Ein Beitrag zur Anlagensicherheit kann durch eine zentrale Datensicherung einer Anlage, einer industriellen Maschine und/oder auch einer Automatisierungskomponente erfolgen, die für verschiedene und/oder einen Kunden zuständig ist. So ist eine automatisierte Datensicherung von einer Zentrale aus erreicht, die entweder von der Zentrale aus in regelmäßigen Abständen initiiert ist oder von der Automatisierungskomponente, von welcher die Sicherung zu erfolgen hat, getriggert ist. Zentrale Einrichtungen die mit dezentralen Automatisierungskomponenten verbunden sind, sind auch befähigt automatisch generierte Endverbleibsmeldungen, Servicemeldungen und Informationen zum Anlagenausbau grad zu managen und/oder zu speichern. Als Übertragungsmedium für die Informationsübermittlung sei hier beispielhaft das Internet oder andere Datennetze bzw. Datenverbindungen wie Local Area Networks oder Mobilfunk genannt.

In vorteilhafter Weise erkennt die Automatisierungskomponente selbst ihren Bedarf an wenigstens einem Produktionsmittel und bestellt dieses.

In vorteilhafter Weise wird der Automatisierungskomponente die Kompetenz übertragen Bestellungen vorzunehmen. Dies reduziert Kosten und erhöht die Verfügbarkeit von Automatisierungskomponenten, da die Bestellung und die Lieferung schneller und/oder sicherer abläuft.

Beispielsweise kann auch die Steuerung einer Anlage, einer Maschine und/oder einer Automatisierungskomponente vom Hersteller darüber in Kenntnis gesetzt werden, dass beispielsweise eine neue Software verfügbar ist. Ist die Automatisierungskomponente autorisiert Software-Updates zu bestellen, so bestellt die Automatisierungskomponente die Software bzw. deren Updates.

In einer vorteilhaften Weise übermittelt die Automatisierungskomponente die Bestellung über ein elektronisches Mittel zur Datenübermittlung an einen Anbieter und der Anbieter führt die Bestellung aus. Der Anbieter ist in der Lage die Automatisierungskomponente, welche die Bestellung ausgelöst hat, zu identifizieren. Nach der Identifikation wird festgestellt, ob die Automatisierungskomponente berechtigt ist eine Bestellung auszuführen und welche Zahlungsmodalitäten bei dieser Automatisierungskomponente vereinbart sind. Ist die Bestellung durch die Automatisierungskomponente korrekt wird die Bestellung durch den Anbieter des Produktionsmittels ausgeführt. Produktionsmittel sind Hardware, Software und/oder Dienstleistungen. Automatisierungskomponenten sind beispielsweise numerische Steuerungen (NC-Steuerungen, (Computer Numerical Controlled), Umrichter, Regelungen.

In einer vorteilhaften Weise fragt die Automatisierungskomponente ein Produktionsmittel auf einen Markt nach, wobei auf dem Markt Angebot und Nachfrage nach wenigstens einem Produktionsmittel herrscht, indem die Automatisierungskomponente eine Bestellung an einen Markt übermittelt und ein Anbieter auf diesen Markt die Nachfrage befriedigt und die Bestellung ausführt. Hierbei ist zu beachten, dass mit der an den Markt übermittelten Bestellung eine Festsetzung des maximalen Preises zu erfolgen hat. In vorteilhafter Weise wird deshalb auch die Automatisierungskomponente auf einen Markt eine Ausschreibung starten um den günstigsten Anbieter für das gesuchte Produktionsmittel zu finden und diesen den Auftrag zu erteilen. Der Markt ist vorteilhafter Weise ein elektronischer Handelsplatz.

In einer weiteren vorteilhaften Weise erhält die Automatisierungskomponente Angebote über Produktionsmittel von wenigstens zwei Anbietern, so dass die Automatisierungskomponente sich bei Bedarf an dem Produktionsmittel das günstigste Angebot auswählt und bestellt. Die Automatisierungskomponente verfügt über ein Budget zur Bezahlung einer Bestellung. Dieses Budget ist beispielsweise wenigstens ein Softwareschlüssel dem eine bestimmte Größe von Geldeinheiten zugrunde liegt. Bei Übermittlung des Softwareschlüssels an den Anbieter werden die zu diesem Schlüssel hinterlegten Geldmittel abgerufen. In einer vorteilhaften Weise ist die Automatisierungskomponente bei einem bestimmten Anbieter registriert und für wenigstens eine oder mehrere Arten von Bestellformen freigeschalten, so dass eine Bestellung auf Ziel erfolgt. Der Ausdruck des Kaufens auf Ziel ist ein ökonomischer Begriff und entspricht letztendlich einen Kauf auf Kredit. Eine weitere Variante ist, dass wenigstens eine Automatisierungskomponenten eines Kunden bei einem Anbieter solange Bestellungen vornimmt bis ein beim Anbieter hinterlegtes Budget überschritten ist.

In einer vorteilhaften Weise verfügt die Automatisierungskomponente über eine Autorisierung zur Bestellung. So ist jede Automatisierungskomponente individuell bezüglich ihrer zugewiesenen Kompetenz Bestellungen auszuführen, parametrierbar. Eine Parametrierungsoption ist beispielsweise, dass eine Prüfung der Bestellung der Automatisierungskomponente durch eine natürliche Person erfolgt.

In einer vorteilhaften Weise erkennt die Automatisierungskomponente den Bedarf nach einem Produktionsmittel. In der Software einer Automatisierungskomponente ist beispielsweise hinterlegt, dass diese in vorgegebenen Abständen beim Hersteller der Automatisierungskomponente nach Update-Versionen für die Software nachfragt und diese im Bedarfsfall bestellt. Vorteilhafter Weise ist mit der Bestellung eine automatische Installation und eine Übernahme der vorhandenen Einstellungen verbunden. In einer vorteilhaften Weise ist das Verfahren so ausgeführt, dass die Automatisierungskomponente von wenigstens einer mit ihr datentechnisch verbundenen anderen Automatisierungskomponente eine Bedarfsmeldung für ein Produktionsmittel erhält. So ist eine Automatisierungskomponente diesbezüglich auslegbar, dass sie den Bedarf anderer mit ihr verbundenen Automatisierungskomponenten ermittelt. In einer vorteilhaften Weise ist eine Automatisierungskomponente, insbesondere dafür vorgesehen Bedarfsmeldungen anderer Automatisierungskomponenten zu empfangen bzw. einen Bedarf an Produktionsmittel anderer Automatisierungskomponenten zu ermitteln und Bestellungen auszuführen. Insbesondere bei Werkzeugmaschinen und/oder bei Produktionsmaschinen, welches Automatisierungskomponenten sind und/oder diese auch aufweisen sind hohe Verfügbarkeiten dieser industriellen Maschine gefordert. Mit Hilfe der Selbstbestellfunktion von Automatisierungskomponenten z.B. über internetartige Mittel und/oder andere Mittel zur Datenübertragung, wie Telekommunikationseinrichtungen ist die Verfügbarkeit der industriellen Maschinen erhöht.

Zur weiteren Erläuterung der Erfindung wird auf die Zeichnung Bezug genommen, in der schematisch das Verfahren zur Bestellung von Produktionsmitteln bei einer Automatisierungskomponente und/oder einer industriellen Maschine veranschaulicht ist.
- FIG 1: zeigt eine erste Gegenüberstellung zweier Bestellabwicklungen und
- FIG 2: eine zweite.

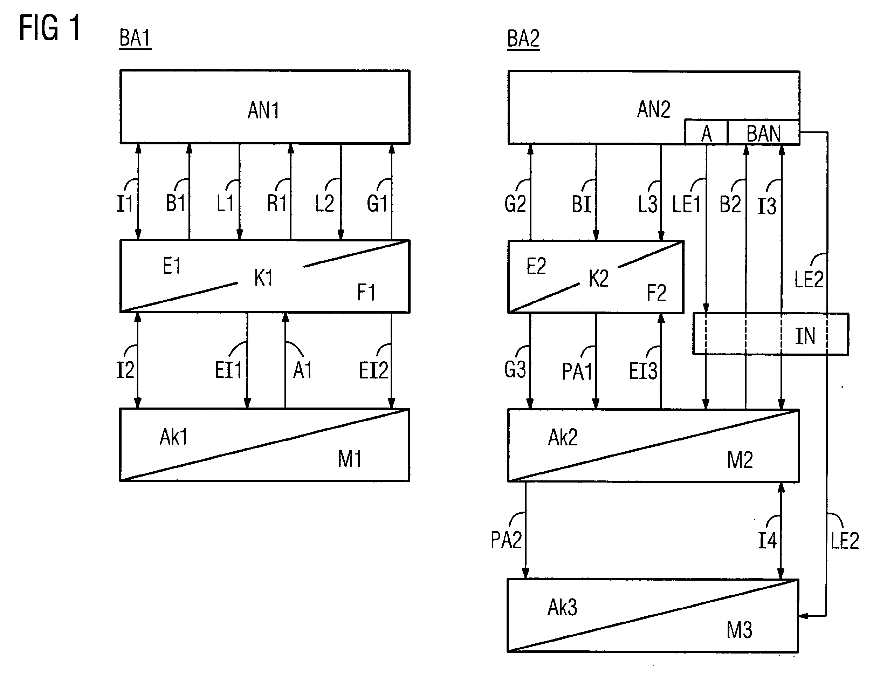

Die Darstellung gemäß FIG 1 zeigt eine Bestellabwicklung BA1 und eine Bestellabwicklung BA2, wobei die Bestellabwicklung BA1 ein Beispiel für eine herkömmliche Bestellung eines Produktionsmittels darstellt. Der Kunde K1 der eine Automatisierungskomponente AK1 und/oder eine industrielle Maschine M1 besitzt steht in Kontakt mit einem Anbieter AN1, der Produktionsmittel für die Automatisierungskomponente AK1 und/oder die industrielle Maschine M1 anbietet. Dabei ist die Automatisierungskomponente AK1 entweder getrennt von einer industriellen Maschine M1 zu betrachten oder wenigstens als Teil dieser. Über einen Austausch von Informationen I1 zwischen dem Kunden K1 und dem Anbieter AN1 erfährt der Kunde K1 etwas über das Angebot des Anbieters AN1. Die Informationen werden beispielsweise durch Printmedien wie Katalogen oder Broschüren oder z.B. durch Telefonate übermittelt. Insbesondere bei großen Kunden K1 ist vorzugsweise eine Abteilung für den Einkauf E1 Kontaktpartner für den Anbieter AN1. Dem Kunden K1 liegen Informationen I2 über seine Automatisierungskomponente AK1 und/oder über die industrielle Maschine M1 vor. Diese Informationen sind insbesondere bei größeren Betrieben in einer Abteilung für die Fertigung F1 vorhanden. Damit ergibt sich beim Kunden K1 eine Schnittstelle zwischen zumindest zwei Abteilungen, einer Abteilung für den Einkauf E1 und einer Abteilung für die Fertigung F1. Durch diese Schnittstelle können Kommunikationsprobleme bezüglich der Informationsweiterleitung entstehen, die beispielsweise die Bestellung eines Ersatzteiles mit einer bestimmten Bestellnummer oder eine bestimmte Software-Update-Version betreffen. Werden Informationen beim Kunden K1 zwischen Abteilungen wie E1 und F1 falsch übermittelt, so erfolgt eine falsche Bestellung von Teilen. Eine Rückabwicklung ist zeit- und kostenintensiv. In schlank organisierten Unternehmen sind derartige Schnittstellenprobleme zwischen Abteilungen des Kunden K1 nur teilweise vorhanden. Meldet die Automatisierungskomponente AK1 beispielsweise einen Fehler und wird durch den Kunden K1 festgestellt, dass ein Ersatzteil bei einem Anbieter AN1 von Ersatzteilen zu bestellen ist, so ist zunächst eine Information I2 darüber zu beschaffen, welches Ersatzteil mit welcher Bestellnummer zu beschaffen ist. Der Kunde K1 kennt über Informationen I1 das Angebot des Anbieters AN1 und sucht sich das entsprechende Ersatzteil zu einem Preis gemäß der Informationen I1. Eine Bestellung B1 des Ersatzteils geht vom Kunden K1 an den Anbieter AN1. Der Anbieter AN1 liefert dem Kunden K1 über die Lieferung L1 das bestellte Produktionsmittel. Dieses Produktionsmittel wird durch den Kunden K1 in die Automatisierungskomponente AK1 und/oder in die industrielle Maschine M1 eingebaut EI1. Die Bezahlung des bestellten Produktionsmittels erfolgt durch den Zahlungsverkehr G1. Ist das bestellte Produktionsmittel ein Hardware-Produkt, so ist eine dingliche Lieferung notwendig ganz im Gegenteil zu einer Bestellung einer Software oder eines Software-Updates. Dennoch wird bei der Bestellung einer Software bzw. eines Software-Updates die dingliche Lieferung über Datenträger vollzogen, da vielfach eine andere Abwicklung der Lieferung der Software insbesondere auch aus Gründen der Bezahlung nicht möglich ist.

Wurde beispielsweise fälschlicherweise ein falsches Produktionsmittel sei es nun eine Hardware oder eine Software bestellt, so erfolgt ein Ausbau A1 aus der Automatisierungskomponente AK1 und/oder der industriellen Maschine M1. Das Produktionsmittel wird an den Anbieter AN1 über eine Rücksendung R1 zurückgegeben. Über eine zweite Lieferung L2 und einen zweiten Einbau EI2 wird dann das korrekte Produktionsmittel in der Automatisierungskomponente 1 bzw. in die industrielle Maschine 1 eingebaut. Diese Bestellabwicklung B1 weist viele Schnittstellen auf, in denen Daten und Informationen zu beschaffen bzw. zu übermitteln sind. Hierbei treten vielfach Übermittlungsfehler z.B. durch Schreibfehler oder Informationsfehler durch die Verwendung alter Kataloge auf. Ein Bestellvorgang gemäß der Bestellabwicklung B1 ist somit kompliziert, langwierig, fehlerbehaftet und/oder kostenträchtig.

Demgegenüber steht die erfindungsgemäße Bestellabwicklung BA2. Die Bestellabwicklung BA2 zeigt einem Kunden K2 mit einer Abteilung für den Einkauf E2 und einer Abteilung für die Fertigung F2. Weiterhin ist eine Automatisierungskomponente AK2 bzw. eine industrielle Maschine M2 und eine Automatisierungskomponente AK3 mit einer industriellen Maschine M3 gezeigt. Erfindungsgemäß ist der Automatisierungskomponente AK2 bzw. der industriellen Maschine M2 ein Budget zuweisbar über welches die industrielle Maschine M2 bzw. die Automatisierungskomponente AK2 beschränkt oder unbeschränkt verfügt. Die Zuweisung des Budget erfolgt beispielsweise durch einen Zahlungsverkehr G3. Bei einem derartigen Zahlungsverkehr G3 wird der Automatisierungskomponente AK2 und/oder der industriellen Maschine M2 ein Zahlungsmittel zur Verfügung gestellt. Dieses Zahlungsmittel ist beispielsweise wenigstens ein Software-Schlüssel der einen bestimmten Geldwert entspricht und als Zahlungsmittel gegenüber einem Anbieter AN2 von Produktionsmitteln dient. Ein anderes Verfahren zur Schaffung eines Budgets für eine Automatisierungskomponente AK2 bzw. einer industriellen Maschine M2 ist durch den Zahlungsverkehr G2 gekennzeichnet. Dieser gibt an, dass der Kunde K2 an den Anbieter AN2 Geldmittel übergibt, so dass für Bestellungen ein Geldmittelbudget beim Anbieter AN2 vorhanden ist. Weiterhin ist beispielsweise durch den Kunden K2 dem Anbieter AN2 anzugeben, welche Automatisierungskomponenten für eine Bestellung autorisiert sind.

In vorteilhafter Weise ist auch ein Kauf auf Ziel zwischen dem Kunden K2 und dem Anbieter AN2 zu vereinbaren. Der Kunde K2 kann gegenüber dem Anbieter AN2 z.B. generell eine Bestellung seiner Automatisierungskomponenten AK2 oder der industriellen Maschine M2 freigeben, wobei diese sich bei einer Bestellung beim Kunden AN2 identifizieren. Das Verfahren der Identifizierung der Automatisierungskomponente AK2 bzw. der industriellen Maschine M2 ist zwischen dem Kunden K2 und dem Anbieter AN2 zu vereinbaren. Stellt nun die Automatisierungskomponente AK2 und/oder die industrielle Maschine M2 einen Bedarf an einem Produktionsmittel fest, so erfolgt eine Bestellung B2 direkt an den Anbieter AN2. Die Bestellung B2 betrifft beispielsweise eine defekte Hardware-Komponente, wobei durch den automatisierten Bestellvorgang zwischen der Automatisierungskomponente AK2 bzw. der industriellen Maschine M2 und einer automatisierten Einrichtung des Anbieters AN2 zur Bestellannahme BAN im Vergleich zur Bestellabwicklung BA1 keine und/oder nur in Ausnahmefällen falsche Bestellungen erfolgen. Die Automatisierungskomponente erkennt selbst den Bedarf an einem Produktionsmittel. Der Anbieter AN2 identifiziert die Automatisierungskomponente AK2 und führt die Bestellung B2 durch die Lieferung L3 an den Kunden K2 aus, wobei durch die Abteilung der Fertigung F2 der Einbau EI3 erfolgt. Bestellt die Automatisierungskomponente eine Software, so erfolgt die Lieferung und gleichzeitig der Einbau beispielsweise automatisch über den Zweig Lieferung und Einbau LE1.

Von Vorteil ist dabei, dass diese Lieferung bzw. der Einbau automatisiert ist. Als Kommunikationsmittel zwischen der Automatisierungskomponente AK2 bzw. der industriellen Maschine M2 und dem Anbieter AN2 dient beispielsweise das Internet IN.

Da die Bestellannahme BAN beim Anbieter AN2 automatisiert ist, ist vorteilhafter Weise auch die Lieferung über eine automatisierte Einrichtung zur Abwicklung A der Lieferung vorteilhaft. Über Informationen I3 tauscht die Automatisierungskomponente AK2 bzw. die industrielle Maschine M2 mit dem Anbieter AN2 Informationen aus, welche z.B. auch die Verfügbarkeit von Ersatzteilen den Preis von Ersatzteilen und/oder anderen Produktionsmitteln betreffen. Weiterhin sind über die Informationen I3 auch die Zahlungsverkehre zwischen dem Anbieter AN2 und der Automatisierungskomponente AK2 bzw. der industriellen Maschine M2 abwickelbar. Ist die Automatisierungskomponente AK2 identifiziert, so ist ihr entsprechend dem ihr zugewiesenen Budget, eine Bestellung gewährbar. Besitzt die Automatisierungskomponente AK2 und/oder die industrielle Maschine M2 einen Software-Schlüssel der einen bestimmten Budget als Zahlungsmittel entspricht, so ist dieser Schlüssel an den Anbieter AN2 übermittelbar. Der Kunde K2 ist in der Lage über eine Parametrierung PA1 seine Automatisierungskomponente AK2 bzw. die industrielle Maschine M2 so zu parametrieren, wie und in welcher Höhe er automatisierte Bestellvorgänge zulassen will. Wurde eine automatisierte Bestellung ausgeführt, so wird dem Kunden K2 eine Bestellinformation BI durch den Anbieter AN2 übermittelt. Die Automatisierungskomponente AK2 bzw. die industrielle Maschine M2 ist auch dahingehend tüchtigbar, dass diese auch Bestellvorgänge für andere Automatisierungskomponenten wie z.B. die Automatisierungskomponente AK3 bzw. die industrielle Maschine M3 durchführen kann. Zwischen den Automatisierungskomponenten AK2 und AK3 bzw. den industriellen Maschinen findet ein Informationsaustausch 14 statt, sowie eine Parametrierung und Kontrolle über den Zweig PA2.

Für die Automatisierungskomponente AK3 bzw. für die industrielle Maschine M3 ist über die Automatisierungs-Komponente AK2 bzw. über die industrielle Maschine M2 eine Bestellung abwickelbar. Die Lieferung erfolgt beispielsweise über die Automatisierungskomponente AK2 bzw. die industrielle Maschine M2 oder direkt über einen separaten Pfad für Lieferung und/oder Einbau LE3. Bei SW-Lieferungen entspricht der Einbau z.B. der Installation der Software.

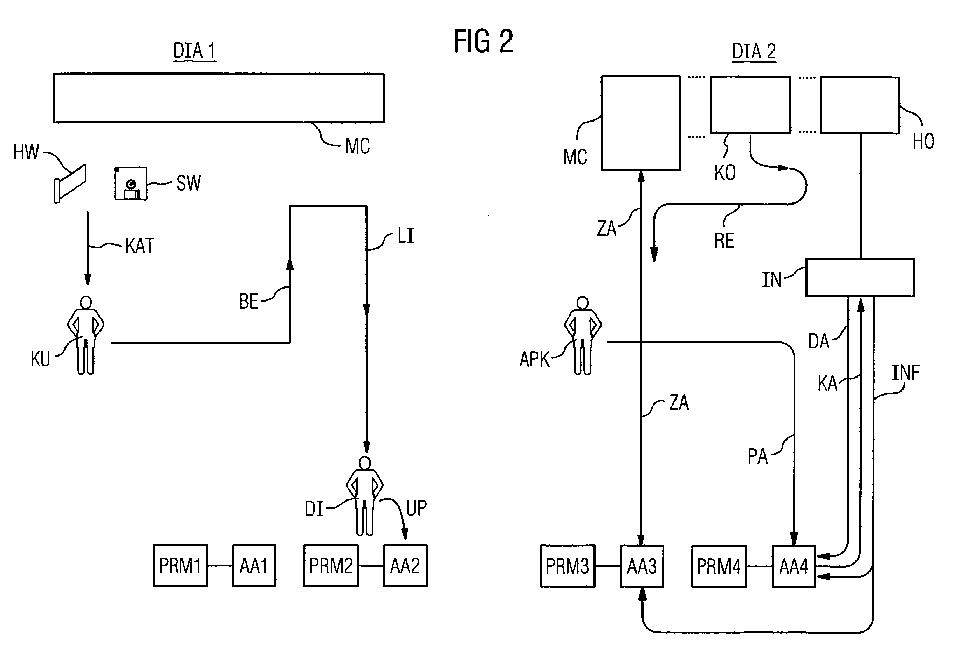

Die Darstellung gemäß FIG 2 zeigt zwei Diagramme DIA1 und DIA2. Das Diagramm DIA1 zeigt einen Prozess zur Ausrüstung einer Maschine mit Produktionsmitteln. Die Maschine ist beispielsweise eine Produktionsmaschine PRM1 oder eine Produktionsmaschine PRM2. Den Produktionsmaschinen PRM1 und PRM2 ist jeweils eine Automatisierungsausrüstung AA1 bzw. AA2 zugeordnet. Ein Hersteller MC von Produktionsmitteln, wobei unter Produktionsmittel sowohl Hardware HW wie auch Software SW oder Dienstleistungen DI zu verstehen sind, bietet einem Kunden KU derartige Produktionsmittel HW, SW und DI an. Bei dem Hersteller MC kann es sich dabei sowohl um ein Hersteller MC handeln, der an einen Endkunden liefert oder um ein Hersteller MC der beispielsweise an OEMs liefert. Beispielsweise sind für Hersteller von Steuerungen für Werkzeugmaschinen die Hersteller von Werkzeugmaschinen die OEMs. Dementsprechend ergibt sich auch die Rolle des Kunden KU, als OEM-Kunde oder als End-Kunde, welcher z.B. eine Werkzeugmaschine vom Werkzeugmaschinenhersteller bekommt. Dem Kunden KU wird vom Hersteller MC Informationsmaterial KAT in Form von beispielsweise Katalogen oder Broschüren über die Produktionsmittel HW, SW bzw. DI zur Verfügung gestellt. Der Kunde KU kann daraus das gewünschte Produktionsmittel wählen und über eine Bestellung BE beim Hersteller MC dieses ordern, so dass es zu einer Lieferung LI des Produktionsmittels für die Produktionsmaschine PRM2 bzw. für die Automatisierungsausrüstung AA2 kommt. Ein Dienstleister stellt dort die Dienstleistung DI zur Verfügung, beispielsweise die Durchführung eines Updates UP einer Software der Produktionsmaschine PRM2 bzw. der Automatisierungsausrüstung AA2. Zwischen den Maschinen, welche im vorliegenden Beispiel als Produktionsmaschine PRM1, PRM2 mit zugehöriger Automatisierungsausrüstung AA1, AA2 dargestellt und dem Hersteller MC von Produktionsmitteln HW, SW, DI ist stets zumindest eine Person zwischengeschaltet. Im Gegensatz dazu wird nun im folgenden im Diagramm DIA2 ein neuartiges Schema zur Versorgung einer Maschine mit Produktionsmitteln dargestellt.

Die Darstellung gemäß FIG 2 zeigt im Diagram DIA2 einen Hersteller MC, welcher Produktionsmittel für die Produktionsmaschine PRM3 mit dazugehörigen Automatisierungsausrüstung AA3 und der Produktionsmaschine PRM4 mit der dazugehörigen Automatisierungsausrüstung AA4 zur Verfügung stellt. Eine ausführende Person APK bildet im vorliegenden Fall eine temporäre Mittlerrolle zwischen dem Hersteller MC und den Produktionsmaschinen PRM3, PRM4 mit der entsprechenden Automatisierungsausrüstung AA3, AA4. Im vorliegenden Beispiel ist die Produktionsmaschine PRM3 zusammen mit der Automatisierungsausrüstung AA3 durch die ausführende Person APK befähigt, sich über ein Internet IN mit einem Hoste HO zu verbinden. Eine derartige Informationsverbindung INF ermöglicht es, beispielsweise Informationen über Software-Updates oder neue Softwareversionen der Automatisierungsausrüstung AA3 zur Verfügung zu stellen. Weiterhin ist es möglich über die Informationsverbindung INF Software-Updates oder andere Software-Produkte an die Automatisierungsausrüstung AA3 zu übermitteln. Ist die Automatisierungsausrüstung AA3 durch die ausführende Person APK beispielsweise berechtigt Software beim Hoste HO zu bestellen, so erfolgt die Bestellung sowie die Lieferung über die Informationsverbindung INF. Bezüglich der Bezahlung des Produktionsgutes, welches von der Automatisierungsausrüstung AA3 bestellt und erhalten wurde, ist auf die Zahlungsregelung ZA zu verweisen, welche zwischen dem Hersteller MC der ausführenden Person APK und der Automatisierungsausrüstung AA3 vereinbart bzw. eingerichtet wurde. Nach Lieferung des Produktionsmittels ist beispielsweise ein Konto KO eines Kunden, der die Produktionsmaschine PRM3, PRM4 betreibt, zu belasten. Eine Rechnungserstellung RE, welche beispielsweise per E-Mail erfolgt gibt beispielsweise Auskunft über die Rechnung selbst aber auch über den neuesten Kontostand des Kontos KO. Die Rechnung RE wird beispielsweise an die ausführende Person APK gestellt. Im Falle der Automatisierungsausrüstung AA3 ist die Bestellung von Produktionsmitteln seien es nun Hardware, Software oder Dienstleistungen bzw. unter Umständen auch deren Lieferung im Falle von Software oder Dienstleistung nach Einrichten der entsprechenden Funktion vollautomatisiert und erfolgt ohne zutun einer ausführenden Person.

Der bestehende Vorgang ist aber auch so einrichtbar, dass durch eine Parametrierung PA durch die ausführende Person APK eine Produktionsmaschine PRM4 zusammen mit der entsprechenden Automatisierungsausrüstung AA4 derart parametriert ist, dass eine Bestellung zwar vorbereitet ist, jedoch deren Durchführung von der Zustimmung der ausführenden Person APK in Einzelfällen abhängt. Die Automatisierungsausrüstung AA4 erhält wie im Fall der Automatisierungsausrüstung AA3 über das Internet IN und einem Hoste HO, welcher z.B. als Update-Verwaltung dient über das Internet IN Informationen über die Informationsverbindung INF. Aufgrund dieser Informationen und der Zustimmung der ausführenden Person APK ist es ermöglicht einen Kauf KA, d.h., eine Bestellung des oder der entsprechenden Produktionsmittel einzuleiten. Die Informationen bzw. Daten DA über den Kauf, welche beispielsweise auch eine Rechnung beinhalten werden im Beispiel mit der Automatisierungsausrüstung AA4 an die Automatisierungsausrüstung AA4 selbst übertragen. So kann der Rechnungsbetrag oder der Kontostand eines durch die Bestellung belasteten Kontos KO von der auszuführenden Person APK an der Automatisierungsausrüstung AA4 gleich selbst in Augenschein genommen werden. Dem Hersteller MC ist es ermöglicht selbst Konten KO oder Hostes HO für Update-Verwaltungen oder ähnliche Funktionalitäten bereitzustellen. In einer vorteilhaften Ausführung der automatischen Bestellausführung ist es aber auch möglich, dass derartige Funktionen von einem Zwischenhandel bereitgestellt werden.

Im wesentlichen kommt es bei der im Diagramm DIA2 gezeigten Schematik zur Bestellung von Produktionsmitteln auch darauf an, dass eine derartige Bestellung mit oder ohne Einwirken einer ausführenden Person APK von einer Maschine, welche beispielsweise die Produktionsmaschine PRM3, PRM4 selbst und/oder eine Automatisierungsausrüstung AA3, AA4 aufweist, automatisch erfolgt. Die Bezahlung der Bestellung erfolgt entweder automatisch über den Abzug von Guthaben auf einem Konto KO oder über den Austausch von Werteinheiten von der Automatisierungsausrüstung an den Hersteller MC oder einen Hoste HO oder über die standardmäßige Erstellung und Bezahlung einer Rechnung oder über andere Formen der Begleichung von anstehenden Forderungen aus dem Erwerb von Produktionsmittel.

Durch die Ertüchtigung einer Automatisierungskomponente, also einer Automatisierungsausrüstung AA3, AA4 wird es erreicht, dass durch diese selbst eine Bestellung von Produktionsmitteln vornehmbar ist. Dadurch sind nicht nur Ausfallzeiten im Fehlerfall reduzierbar, sondern eine Maschine ist auch besser und intensiver wartbar, da beispielsweise auch immer aktuell Softwarefehler durch automatische Softwareupdates beseitigbar sind. Ist eine Maschine, sei es nun eine Werkzeugmaschine, eine Produktionsmaschine oder ein Handhabungsautomat umzurüsten, so sind durch deren Automatisierungskomponente alle dafür benötigten Produktionsmittel schnell und sicher bestellbar. Dadurch sind Ausfallzeiten in einer Produktion reduzierbar. Bei Bestellungen treten keine irrtümlichen Bestellungen z.B. durch Schreibfehler auf.

## Patentansprüche

1. Verfahren zur Bestellung von Produktionsmitteln (HW,SW,DI) bei dem zumindest eine Automatisierungskomponente (AK2,AK3, AA3,AA4) wenigstens ein Produktionsmittel (HW,SW,DI) bestellt.

2. Verfahren nach Anspruch 1,
**dadurch gekennzeichnet, dass** die Automatisierungskomponente (AK2,AK3,AA3,AA4) den Bedarf nach einem Produktionsmittel (HW,SW,DI) ermittelt.

3. Verfahren nach Anspruch 1 oder 2,
**dadurch gekennzeichnet, dass** das Produktionsmittel Hardware (HW) ist.

4. Verfahren nach einem der vorgenannten Ansprüche,
**dadurch gekennzeichnet, dass** das Produktionsmittel Software (SW) ist.

5. Verfahren nach einem der vorgenannten Ansprüche ,
**dadurch gekennzeichnet, dass** das Produktionsmittel eine Dienstleistung (DI) ist.

6. Verfahren nach einem der vorgenannten Ansprüche ,
**dadurch gekennzeichnet, dass** die Automatisierungskomponente (AK2,AK3,AA3,AA4) die Bestellung über ein elektronisches Mittel zur Datenübermittlung an einen Anbieter übermittelt, und der Anbieter die Bestellung ausführt.

7. Verfahren nach einem der Ansprüche 1 bis 5,
**dadurch gekennzeichnet, dass** die Automatisierungskomponente (AK2,AK3,AA3,AA4) ein Produktionsmittel (SW,HW,DI) auf einem Markt nachfragt, wobei auf dem Markt Angebot und Nachrage nach wenigstens einem Produktionsmittel herrscht, indem die Automatisierungskomponente (AK2,AK3,AA3,AA4) eine Bestellung (B1,B2) an einen Markt übermittelt und ein Anbieter (AN1,AN2) auf diesem Markt die Nachfrage befriedigt und die Bestellung ausführt.

8. Verfahren nach einem der Ansprüche 1 bis 5,
**dadurch gekennzeichnet, dass** die Automatisierungskomponente (AK2,AK3,AA3,AA4) Angebote wenigstens eines Produktionsmittels (SW,HW,DI) von wenigstens zwei Anbietern (AN1,AN2) erhält und ein Angebot auswählt.

9. Verfahren nach einem der vorgenannten Ansprüche,
**dadurch gekennzeichnet, dass** die Automatisierungskomponente (AK2,AK3,AA3,AA4) über ein Budget also Bezahlung der Bestellung (B1,B2) verfügt.

10. Verfahren nach einem der vorgenannten Ansprüche,
**dadurch gekennzeichnet, dass** die Automatisierungskomponente (AK2,AK3,AA3,AA4) über eine Autorisierung zur Bestellung verfügt.

11. Verfahren nach einem der vorgenannten Ansprüche ,
**dadurch gekennzeichnet, dass** die Bestellung (B1,B2) durch eine, durch einen Anwender parametrierbare und/oder programmierbare Software erfolgt, bei welcher insbesondere Autorisierungen und/oder Bestellverfahren abänderbar sind.

12. Verfahren nach einem der vorgenannten Ansprüche ,
**dadurch gekennzeichnet, dass** eine Prüfung der Bestellung (B1,B2) durch einen Anwender (APK) erfolgt.

13. Verfahren nach einem der vorgenannten Ansprüche ,
**dadurch gekennzeichnet, dass** die Automatisierungskomponente (AK2,AK3,AA3,AA4) für sich den Bedarf nach einem Produktionsmittel erkennt.

14. Verfahren nach einem der vorgenannten Ansprüche,
**dadurch gekennzeichnet, dass** die Automatisierungskomponente (AK2,AK3,AA3,AA4) von wenigstens einer mit ihr datentechnisch verbundenen Komponente eine Bedarfsmeldung erhält.

15. Verfahren nach einem der vorgenannten Ansprüche,
**dadurch gekennzeichnet, dass** die Automatisierungskomponente den Bedarf wenigstens eine mit ihr datentechnisch verbundenen Komponente ermittelt.

16. Verfahren nach einem der vorgenannten Ansprüche,
**dadurch gekennzeichnet, dass** die Automatisierungskomponente wenigstens ein Teil einer Werkzeugmaschine ist.

17. Verfahren nach einem der Ansprüche 1 bis 15,
**dadurch gekennzeichnet, dass** die Automatisierungskomponente wenigstens ein Teil einer Produktionsmaschine ist.
